# EUROPÄISCHE PATENTSCHRIFT

(11) **EP 3 894 179 B1**
(45) Veröffentlichungstag und Bekanntmachung des Hinweises auf die Patenterteilung: **14.05.2025**
(21) Anmeldenummer: 19816516.9
(22) Anmeldetag: 06.11.2019
(51) Int. Cl.: B29C 55/06, B29D 7/01, B29C 41/26, B29C 43/24

(54) **FOLIENANLAGE UND VERFAHREN ZUM HERSTELLEN EINER FOLIENBAHN SOWIE VERWENDUNG EINER FOLIENMATERIALSCHMELZE VERARBEITENDEN WALZENEINRICHTUNG**
FILM PLANT AND METHOD FOR PRODUCING A FILM WEB AS WELL AS USE OF A ROLLER DEVICE FOR PROCESSING A FILM MATERIAL MELT
USINE À FILM ET PROCÉDÉ DE FABRICATION D'UNE BANDE DE FILM AINSI Q'UTILISATION D'UN DISPOSITIF À ROULEAU POUR TRAITER UN MATÉRIAU DE FILM FONDU

(30) Priorität: 11.12.2018 DE 102018131830
(43) Veröffentlichungstag der Anmeldung: 20.10.2021
(73) Patentinhaber: Reifenhäuser GmbH & Co. KG Maschinenfabrik, 53844 Troisdorf (DE)
(72) Erfinder: SCHUSTER, Mark, 53129 Bonn (DE); WALACH, Paul, 53844 Troisdorf (DE); SCHIPPERS, Sebastian, 53842 Troisdorf (DE)
(74) Vertreter: Meissner Bolte Partnerschaft mbB
(86) Internationale Anmeldenummer: PCT/DE2019/100958
(87) Internationale Veröffentlichungsnummer: WO 2020/119847

(56) Entgegenhaltungen:
- WO-A1-2015/175593
- DE-A1- 102005 027 085
- US-A- 2 586 820
- US-A1- 2010 090 364
- US-A1- 2017 246 786

## Beschreibung

Die Erfindung betrifft eine Folienanlage zum Herstellen einer Folienbahn, insbesondere einer Gießfolien- oder Glättwerksanlage, mit einer Maschinenrichtung, entlang welcher die Folienbahn durch die Folienanlage transportiert wird, mit einer eine Folienmaterialschmelze verarbeitenden Walzeneinrichtung umfassend wenigstens eine Arbeitswalze, mit Temperiereinrichtungen zum thermischen Behandeln der Folienbahn und mit einer Reckeinrichtung zum Recken der Folienbahn.

Die Erfindung betrifft des Weiteren ein Verfahren zum Herstellen, insbesondere zum Gießwalzen oder Glättwalzen, einer Folienbahn, bei welchen eine Folienmaterialschmelze einer diesbezüglichen Folienmaterialschmelze verarbeitenden Walzeneinrichtung mit wenigstens einer Folienerzeugungswalze zugeführt und diese Folienmaterialschmelze mittels der wenigstens einen Folienerzeugungswalze zu der Folienbahn geformt wird, und bei welchem die Folienbahn anschließend unterschiedlichen Temperiereinrichtungen sowie wenigstens einer Reckeinrichtung zugeführt wird.

Die Erfindung betrifft auch noch eine Verwendung einer Folienmaterialschmelze verarbeitenden Walzeneinrichtung.

Insbesondere gattungsgemäße Folienanlagen zum Herstellen einer Folienbahn sind speziell als Gießfolienanlagen oder als Glättwerksanlagen aus dem Stand der Technik bekannt.

Die US-amerikanische Offenlegungsschrift US 2 586 820 A offenbart ein Verfahren zum Herstellen einer Folienbahn, bei welchem eine Folienmaterialschmelze einer diesbezüglichen Folienmaterialschmelze verarbeitenden Walzeneinrichtung mit wenigstens einer Folienerzeugungswalze zugeführt, und diese Folienmaterialschmelze mittels der wenigstens einen Folienerzeugungswalze zu der Folienbahn geformt wird, und bei welchem die Folienbahn anschließend unterschiedlichen sowie wenigstens einer Reckeinrichtung zugeführt wird, wobei die für einen an der Reckeinrichtung durchführbaren Reckprozess erforderliche Recktemperatur mittels der eine Folienmaterialschmelze verarbeitenden Walzeneinrichtung zur Gänze oder zumindest zu 50 %, vorzugsweise zumindest zu 80 % oder mehr, erzeugt wird.

Die US-amerikanische Offenlegungsschriften US 2017 246 786 A1 und US 2010 090 364 A1 offenbaren Verfahren zur Herstellung eines strukturierten mikroporösen atmungsaktiven Films. Eine Polyolefinschmelze mit einem anorganischen Füllstoff und einem Pigment wird extrudiert und auf die Oberfläche einer Kühlwalze gegossen, wobei der derart abgeschreckte Film gestreckt wird, wodurch der strukturierte, mikroporöse und atmungsaktive Film gebildet wird.

Die deutsche Offenlegungsschrift DE 10 2005 027 085 zeigt ein Verfahren zur thermischen Behandlung einer monoaxial oder biaxial zu reckenden thermoplastischen Folienbahn, wobei der Energieeinsatz und der anlagentechnischen durch die Verwendung einer selektiv transformierten Infrarotstrahlung reduziert ist. Die selektiv transformierte Infrarotstrahlung emittiert Wellenlängen, die dem Absorptionsvermögen der z.B. aus Polyamid, Polypropylen oder Polyester zu reckenden Folienbahn angepasst werden können, wobei das selektiv transformierte Infrarot dadurch erreicht wird, dass die Außenseite des Emitters eines z.B. mittelwelligen Strahlers mit einer Keramikschicht als Funktionskeramik versehen wird. Die internationale Offenlegungsschrift WO 2015 / 175 593 A1 offenbart eine Folienanlage zum Erstellen einer Folienbahn, mit einer Maschinenrichtung, entlang welcher die Folienbahn durch die Folienanlage transportiert wird, mit einer eine Folienmaterialschmelze verarbeitenden Walzeneinrichtung umfassend wenigstens eine Folienerzeugungswalze, mit Temperiereinrichtungen zum thermischen Behandeln der Folienbahn und mit einer Reckeinrichtung zum Recken der Folienbahn, wobei die Reckeinrichtung unter Umgehung einer kritischen Auskühlstrecke in Maschinenrichtung hinter der wenigstens einen Folienerzeugungswalze angeordnet ist, wobei ein Abstand und/ oder eine Übergabestrecke zwischen der wenigstens einen Folienerzeugungswalze und einer Eingangswalze der Reckeinrichtung weniger als 1000 mm beträgt und wobei die Reckeinrichtung wenigstens eine temperierbare Reckwalze umfasst. Der Erfindung liegt die Aufgabe zugrunde, gattungsgemäße Folienanlagen zum Herstellen einer Folienbahn, aber auch diesbezügliche Verfahren, weiterzuentwickeln, um verbesserte Folieneigenschaften zu erzielen.

Die Aufgabe der Erfindung wird nach einem ersten Aspekt von einer Folienanlage zum Herstellen einer Folienbahn mit einer Maschinenrichtung, entlang welcher die Folienbahn durch die Folienanlage transportiert wird, mit einer eine Folienmaterialschmelze verarbeitenden Walzeneinrichtung umfassend wenigstens eine Folienerzeugungswalze bzw. einen Folienerzeugungsspalt, mit Temperiereinrichtungen zum thermischen Behandeln der Folienbahn und mit einer Reckeinrichtung zum Recken der Folienbahn gelöst, wobei sich die Folienanlage dadurch auszeichnet, dass die Reckeinrichtung unter Umgehung einer kritischen Auskühlstrecke in Maschinenrichtung hinter der wenigstens einen Folienerzeugungswalze angeordnet ist.

Dadurch, dass die Reckeinrichtung unter Umgehung einer kritischen Auskühlstrecke in Maschinenrichtung hinter der wenigstens einen Folienerzeugungswalze und/oder dementsprechend auch dem Folienerzeugungsspalt angeordnet ist, ist es möglich, die Folienbahn bereits mit der ihr bezüglich der Folienmaterialschmelze noch inne innewohnenden Temperatur zu einem Zeitpunkt zu recken, bei welchen die Folienbahn noch nicht bis unterhalb einer kritischen Recktemperatur aus- beziehungsweise abgekühlt ist.

Hierdurch können die Folieneigenschaften nochmals signifikant verbessert werden. Insbesondere können mechanische Eigenschaften in Längsrichtung der Folie nochmals deutlich verbessert werden.

Zudem kann die gesamte Folienanlage einerseits energetisch besonders effizient betrieben werden; aus dem einfachen Grund, da ein energetisch ungünstiges Abkühlen der Folienbahn bzw. des Folienmaterials nach dem Abnehmen von der Folienerzeugungswalze bzw. dem Folienerzeugungsspalt und dem Zuführen zu der Reckeinrichtung vermieden oder zumindest signifikant reduziert wird, wodurch ein zusätzliches Wiedererwärmen der Folienbahn bzw. des Folienmaterials bis an die bzw. vorzugsweise in die erforderliche Recktemperatur hinein überflüssig wird.

Andererseits baut die vorliegende Folienanlage äußerst kompakt, da auf zusätzliche energieintensive Heizeinrichtungen verzichtet werden kann, weil die Folienbahn auf einer Strecke zwischen der Folienmaterialschmelze verarbeitenden Walzeneinrichtung und der Reckeinrichtung erst gar nicht unterhalb einer kritischen Recktemperatur auskühlt.

Zunächst sei darauf noch hingewiesen, dass im Rahmen der hier vorliegenden Patentanmeldung unbestimmte Artikel und unbestimmte Zahlenangaben wie "ein...", "zwei..." usw. im Regelfall als mindestens-Angaben zu verstehen sein sollen, also als "mindestens ein...", "mindestens zwei..." usw., sofern sich nicht etwa aus dem Kontext oder dem konkreten Text einer bestimmten Stelle ergibt, dass etwa dort nur "genau ein...", "genau zwei..." usw. gemeint sein soll.

An dieser Stelle sei ebenfalls bereits erwähnt, dass im Rahmen der hier vorliegenden Patentanmeldung der Ausdruck "insbesondere" immer so zu verstehen sei, dass mit diesem Ausdruck ein optionales, bevorzugtes Merkmal eingeleitet wird. Der Ausdruck ist nicht als "und zwar" und nicht als "nämlich" zu verstehen.

Ferner beschreibt der Begriff "Folienanlage" eine Anlage, mittels welcher unterschiedlichste Folien aus einer Folienmaterialschmelze, wie etwa einem geschmolzenen Granulat oder dergleichen, hergestellt werden können. Bevorzugt liegt die Folienmaterialschmelze als eine Kunststoffschmelze vor.

Insbesondere betrifft die Erfindung somit Gießfolienanlagen beziehungsweise Glättwerksanlagen, mittels welchen eine Folienmaterialschmelze zu einer Folienbahn und damit auch zu einer gewünschten Folie gewalzt werden können.

Insofern wird hinsichtlich der vorliegenden Folienanlage bevorzugt mittels einer geeigneten Schmelzendüse die Folienmaterialschmelze in Form einer Schmelzenfahne auf einer Gießwalze aufgetragen oder alternativ hierzu in einem Walzenspalt zwischen zwei Glättwalzen hineingegeben, so dass mithilfe der Gießwalze bzw. der Glättwalzen aus der Folienmaterialschmelze eine entsprechende Folienbahn erzeugt wird.

Im Sinne der Erfindung beschreibt der Begriff "Folienerzeugungswalze" sowohl derartige Gießwalzen als auch Glättwalzen. Demzufolge wird der hier beschriebene "Folienerzeugungsspalt" als entsprechender Walzenspalt an einer Glättwerksanlage angesehen, wobei der vorliegende Folienerzeugungsspalt dann entsprechend von Folienerzeugungswalzen gebildet ist.

Insofern treffen Merkmale, welche in Bezug auf eine Folienerzeugungswalze erläutert werden, im Zusammenhang mit vorliegender Erfindung auch auf einen Folienerzeugungsspalt zu, auch wenn dies an entsprechenden Stellen nicht explizit beschrieben sein braucht, um Wiederholungen zu vermeiden.

Da derartige Gießfolienanlagen beziehungsweise Glättwerksanlagen aus dem Stand der Technik bereits gut bekannt sind, wird vorliegend auf weiterführende Funktionsprinzipien nicht weiter eingegangen.

Mit der Bezeichnung "Folienmaterialschmelze verarbeitende Walzeneinrichtung" sind im Wesentlichen eben die vorgenannten Einrichtungen verstanden, welche sich entweder durch wenigstens eine Gießwalze beziehungsweise wenigstens zwei Glättwalzen, welche einen Walzenspalt zwischen sich bedingen, auszeichnen, wobei eine derartige Walzeneinrichtung unterschiedlich aufgebaut sein kann.

Beispielsweise kann der vorliegenden Folienmaterialschmelze verarbeitenden Walzeneinrichtung sogleich eine Extrudiereinheit mit einer entsprechenden Schmelzendüse zugeordnet sein, mittels welcher die Folienmaterialschmelze an der jeweiligen Folienerzeugungswalze bereitgestellt werden kann.

Der Begriff "Folienerzeugungswalze", umfasst hierbei demensprechend Gießwalzen oder alternativ auch Glättwalzen, auch je nachdem, welche Anlage zum Herstellen der vorliegenden Folienbahn eingesetzt wird.

Der Begriff "Folienbahn" beschreibt im Sinne der Erfindung verschiedenste Folien, welche als Flachfolien ausgebildet sind, wobei die vorliegende Erfindung sich auf Anwendungsbereiche von beispielsweise CPP-Folien, Barrierefolien, Hygienefolien, Cast-PET-Folien, Schutzfolien, Folien aus PS oder PP, mineralgefüllte Folien oder dergleichen beziehen, um hier nur einige Anwendungsmöglichkeiten exemplarisch aufzuzeigen.

Die Bezeichnung "Temperiereinrichtungen" beschreibt im Sinne vorliegender Erfindung sämtliche neben der Folienmaterialschmelze verarbeitenden Walzeneinrichtung und der Reckeinrichtung thermisch auf die Folienbahn wirkenden Einrichtungen, welche insbesondere mittels Temperierwalzen mit der Folienbahn unmittelbar in thermischen Wirckontakt beziehungsweise körperlichen Wirkkontakt treten können.

Derartige Temperiereinrichtungen können vorliegend Einrichtungen umfassen, welche insbesondere mit entsprechend eingerichteten Temperierwalzen etwa Wärme in die Folienbahn einbringen oder aber auch Wärme aus der Folienbahn austragen beziehungsweise ein Wärmeniveau an der Folienbahn halten können.

Der Begriff "kritische Recktemperatur" beschreibt im Sinne der vorliegenden Erfindung eine Temperatur an beziehungsweise in der Folienbahn, beziehungsweise des Folienmaterials, wobei sich die kritische Recktemperatur in einem Temperaturbereich zwischen 70 °C und circa 180 °C befinden kann, je nachdem, welches Folienmaterial verwendet beziehungsweise welche Folienbahn erzeugt wird.

Der Begriff "kritische Auskühlstrecke" bezeichnet im Sinne vorliegender Erfindung eine Strecke zwischen der Folienmaterialschmelze verarbeitenden Walzeneinrichtung und der Reckeinrichtung, entlang welcher die Folienbahn in Maschinenrichtung durch die Folienanlage transportiert wird. Hierbei ist die kritische Auskühlstrecke derart konzipiert, dass die der Folienbahn innewohnende Wärmeenergie nicht kritisch an eine Recktemperaturgrenze heran oder unterhalb einer kritischen Recktemperatur absinkt, bevor die Folienbahn an die Reckeinrichtung übergeben wurde, insbesondere ausgehend von der Folienerzeugungswalze.

Vorliegend wurde erkannt, dass die Folienanlage hinsichtlich ihres energetischen Wirkungsgrads signifikant weiterentwickelt werden kann, wenn die für einen an der Reckeinrichtung durchführbaren Reckprozess erforderliche Recktemperatur mittels der eine Folienmaterialschmelze verarbeitenden Walzeneinrichtung zur Gänze oder zumindest zu 50 %, vorzugsweise zumindest zu 80 % oder mehr, erzeugbar ist.

Vorteilhafterweise kann hierdurch vermieden werden, dass die Folientemperatur nach dem Verlassen der Folienbahn der Folienmaterialschmelze verarbeitenden Walzeneinrichtung und vor dem Erreichen der Reckeinrichtung bis unterhalb der Recktemperatur abfällt, wodurch die Folienbahn für einen Reckprozess dazwischen nicht oder kaum zusätzlich erwärmt werden muss.

Um eine kritische Auskühlstrecke zwischen der Folienmaterialschmelze verarbeitenden Walzeneinrichtung und der Reckeinrichtung zu vermeiden, kann vorliegend eine Übergabestrecke beziehungsweise Zwischenstrecke zwischen der Folienmaterialschmelze verarbeitenden Walzeneinrichtung und der Reckeinrichtung unterschiedlichst ausgebildet sein.

Beispielsweise können an einer derartigen Übergabestrecke Infrarotheizungen oder dergleichen angeordnet sein, um eine kritische Abkühlung der Folienbahn nach dem Abnehmen von der Folienerzeugungswalze im Sinne der Erfindung zu vermeiden, wodurch jedoch die Energiebilanz der vorliegenden Folienanlage wieder ungünstig beeinflusst werden würde.

Besonders vorteilhaft ist es jedoch, wenn die Folienmaterialschmelze verarbeitenden Walzeneinrichtung und die Reckeinrichtung derart eng zueinander angeordnet sind, dass die Übergabestrecke dazwischen signifikant verkürzt ist, so dass es erst gar nicht zu einer Ausbildung einer kritischen Auskühlstrecke kommen kann.

Somit ist es vorteilhaft, wenn ein Abstand zwischen der wenigstens einen Folienerzeugungswalze bzw. dem Folienerzeugungsspalt, und einer Eingangswalze der Reckeinrichtung weniger als 1000 mm oder weniger als 800 mm vorzugsweise weniger als 500 mm oder weniger, beträgt.

Bevorzugt werden dieser Abstand bzw. diese Übergabestrecke nicht kleiner als 200 mm oder 250 mm gewählt werden.

Insofern ist es in diesem Zusammenhang zweckmäßig, wenn ein Abstand und/oder eine Übergabestrecke zwischen der wenigstens einen Folienerzeugungswalze und einer Eingangswalze der Reckeinrichtung mehr als 200 mm oder mehr als 250 mm, vorzugsweise mehr als 450 mm, beträgt.

Durch eine derart kompakte Bauweise kann konstruktiv einfach eine kritische Auskühlstrecke im Sinne der Erfindung vermieden werden, wodurch sich die Energiebilanz der Folienanlage gegenüber dem Stand der Technik signifikant verbessern lässt. Insbesondere lassen sich hierdurch die Folieneigenschaften verbessern, wie vorstehend bereits erwähnt.

Mit anderen Worten gesagt, die Reckeinrichtung ist derart nahe an der Folienmaterialschmelze verarbeitenden Walzeneinrichtung angeordnet, dass die erzeugte Folienbahn vorzugsweise unmittelbar mit der ihr aus dem Gießprozess oder Glätteprozess noch innewohnenden Wärme gereckt wird, also sozusagen aus der ersten Wärme der Folienbahn heraus.

Dies bedeutet mit anderen Worten, dass die Recktemperatur an der Folie zum Recken an der Reckeinrichtung idealerweise zur Gänze aus der Wärme des Gießwalzprozesses oder des Glättwalzprozesses herrührt, wodurch die vorliegende Folienanlage äußerst energieeffizient betrieben werden kann. Selbst, wenn die Recktemperatur nur hinsichtlich 10 % aus der Wärme des Gießwalzprozesses oder des Glättwalzprozesses stammt, kann die Folienanlage im Sinne der Erfindung bereits effizienter als im Stand der Technik betrieben werden.

Eine signifikante energetische Verbesserung kann bereits erreicht werden, wenn mehr als 80 % der erforderlichen Recktemperatur von der Folienmaterialschmelze verarbeitenden Walzeneinrichtung erzeugt wird, also aus der Wärme des Gießwalzprozesses oder des Glättwalzprozesses kommt.

Insofern ist es vorteilhaft, wenn sich die Folienanlage durch eine Übergabestrecke zwischen der wenigstens einen Folienerzeugungswalze bzw. dem Folienerzeugungsspalt, und einer Eingangswalze der Reckeinrichtung auszeichnet, wobei die Übergabestrecke weniger als 1000 mm oder 800 mm, vorzugsweise weniger als 500 mm oder weniger, beträgt, aber bevorzugt mehr als 250 mm.

Während der Abstand zwischen der die Folienmaterialschmelze verarbeitenden Walzeneinrichtung und der Reckeinrichtung bevorzugt die eigentliche Distanz zwischen den beiden vorgenannten Komponenten der Folienanlage beschreibt, also die Luftlinie, kann die Übergabestrecke ebenfalls geradlinig, aber im Gegensatz hierzu auch kurvig zwischen der Folienmaterialschmelze verarbeitenden Walzeneinrichtung und der Reckeinrichtung verlaufen.

Der Abstand bzw. die Übergabestrecke können hierbei in Abhängigkeit von der Art der eingesetzten Folienmaterialschmelze verarbeitenden Walzeneinrichtung, des Folienmaterials bzw. Kunststoffmaterials, der Dicke der Folienbahn oder ähnlichem gewählt werden, und die sich hieraus ergebende Ab- bzw. Auskühlrate an der Folienbahn.

Beispielsweise kann bei dickeren Folienbahnen ein Abstand bzw. eine Übergabestrecke von 1000 mm gewählt werden, während bei dünneren Folienbahnen oder bei Folienmaterialien, welche eine höhere Recktemperatur erfordern, ein geringerer Abstand bzw. eine geringere Übergabestrecke erforderlich erscheint, etwa von 500 mm oder weniger.

Eine bevorzugte Ausführungsvariante sieht etwa vor, dass die Reckeinrichtung in Maschinenrichtung hinter der Folienerzeugungswalze derart angeordnet ist, dass die die Folienerzeugungswalze verlassende Folienbahn unmittelbar an die Reckeinrichtung übergebbar ist. Durch eine unmittelbare Platzierung der Reckeinrichtung hinter der die Folienschmelze verarbeitenden Walzeneinrichtung kann sichergestellt werden, dass die Folienbahn unter möglichst geringem Wärmeverlust von der Folienmaterialschmelze verarbeitenden Walzeneinrichtung, insbesondere von der Folienerzeugungswalze und damit ggf. auch von dem Folienerzeugungsspalt, direkt an die Reckeinrichtung gelangt, so dass eine zusätzliche Erwärmung beziehungsweise Wiederaufwärmung der Folienbahn vor dem eigentlichen Reckprozess unterbleiben kann.

Im Sinne der vorliegenden Erfindung beschreibt der Begriff "unmittelbar", dass die Reckeinrichtung ohne Zwischenschaltung einer weiteren technischen Einrichtung, wie beispielsweise einer zusätzlichen Temperiereinrichtung, wie eine Temperierwalze, oder einer anderen Walze, sei es eine Umlenkwalze, eine Führungswalze, eine Antriebswalze oder dergleichen, hinter der eine Folienmaterialschmelze verarbeitenden Walzeneinrichtung platziert bzw. angeordnet ist.

Je nach Aufbau und Einsatzgebiet der jeweiligen Folienanlage beziehungsweise je nach herzustellender Folie, ist es vorteilhaft, wenn die Reckeinrichtung eine Folienbahnabnahmewalze umfasst, mittels welcher die Folienbahn von der Folienerzeugungswalze abnehmbar ist. Hierdurch kann gewährleistet werden, dass die Folienbahn unmittelbar durch ein Bauteil der Reckeinrichtung von der Folienerzeugungswalze abgenommen werden kann, wodurch ein Abstand beziehungsweise eine Übergabestrecke zwischen der Folienerzeugungswalze und der Reckeinrichtung signifikant reduziert werden kann. Bei dieser Ausführungsvariante kann aufgrund eines im Wesentlichen kaum vorhandenen Abstands oder einer im Wesentlichen kaum vorhandenen Übergabestrecke eine kritische Abkühlung der Folienbahn nahezu zur Gänze ausgeschlossen werden.

Sollte eine derartige unmittelbare Folienübergabe zwischen der Folienmaterialschmelze verarbeitenden Walzeneinrichtung und der Reckeinrichtung nicht möglich sein oder sinnvoll erscheinen, beispielsweise aufgrund erhöhter Qualitätsanforderung an die herzustellende Folienbahn, ist es alternativ vorteilhaft, wenn die Reckeinrichtung in Maschinenrichtung hinter der Folienerzeugungswalze derart angeordnet ist, dass die die Folienerzeugungswalze verlassende Folienbahn zuerst an eine Vortemperiereinrichtung und anschließend an die Reckeinrichtung übergebbar ist. Mittels einer derartigen Vortemperiereinrichtung kann eine gleichmäßigere Temperierung der Folienbahn beziehungsweise eine gleichmäßigere Temperaturverteilung an der Folienbahn erzielt werden, wodurch sich die Qualität eines Reckprozesses und damit insgesamt die Qualität der Folienbahn sehr gut verbessern lässt.

Insofern ist eine derartige Vortemperiereinrichtung vorzugsweise zum Vergleichmäßigen einer Temperatur innerhalb beziehungsweise an der Folienbahn zweckmäßig zwischen der Reckeinrichtung beziehungsweise einer Eingangswalze der Reckeinrichtung und der Folienmaterialschmelze verarbeitenden Walzeneinrichtung beziehungsweise deren wenigstens einen Folienerzeugungswalze und/oder Folienerzeugungsspalt vorgesehen.

In diesem Zusammenhang ist es vorteilhaft, wenn die Vortemperiereinrichtung wenigstens eine Folienvortemperierwalze umfasst, mittels welcher die Folienbahn mit einer Temperatur oberhalb 70 °C, vorzugsweise zwischen 90 °C und 120 °C, vortemperierbar ist. Durch die hier vorgeschlagenen Temperaturen kann die Folienbahn derart temperiert werden, dass die Temperatur der Folienbahn innerhalb einer erforderlichen Recktemperatur liegt.

Ist eine derartige Vortemperiereinrichtung vorgesehen, ist es beispielsweise möglich, dass die Reckeinrichtung ohne temperierbare Walzen auskommt.

Kumulativ oder alternativ ist es ferner vorteilhaft, wenn die Reckeinrichtung wenigstens eine temperierbare Reckwalze umfasst.

Hierdurch kann einerseits die erforderliche Recktemperatur an der Folienbahn noch optimaler eingestellt werden.

Anderseits kann die Folienbahn unmittelbar durch die Reckeinrichtung erwärmt werden beziehungsweise die bereits der Folienbahn innewohnende Temperatur konstruktiv einfach gehalten werden, selbst dann, wenn auf eine zusätzliche Vortemperiereinrichtung verzichtet werden soll, beispielsweise aus Platzgründen.

Besonders zweckmäßig ist es, wenn mittels der Reckeinrichtung die Folienbahn zwischen 0,5 % und 5 %, oder mehr als 5 %, jedenfalls in Maschinenrichtung, vorzugsweise um 50 % oder mehr, oft auch bis zu 1000 %, reckbar ist.

Es versteht sich, dass die vorliegende Reckeinrichtung unterschiedlichst ausgestaltet werden kann, um die Folienbahn im Sinne vorliegender Erfindung in gewünschter beziehungsweise geeigneter Weise in Maschinenrichtung und/oder quer zur Maschinenrichtung zu recken beziehungsweise zu verstrecken, wie ein Reckprozess oftmals auch genannt wird.

Umfasst die Reckeinrichtung beispielsweise ein Planlagepaket, kann die Folienbahn problemlos zwischen 0,5 % und 5 % gereckt werden.

Umfasst die Reckeinrichtung kumulativ oder alternativ eine MDO-Einrichtung, kann die Folienbahn auch problemlos mehr als 5 % gereckt werden.

Eine "MDO"-Einrichtung steht hierbei für "Machine Direction Orientation", also für ein Orientieren von Kunststoffmoleküle in Maschinenrichtung, also der Transportrichtung des Folienmaterials beziehungsweise der Folienbahn durch die vorliegende Folienanlage hindurch.

Da auch derartige Planlagepakete beziehungsweise "MDO"-Einrichtungen bereits aus dem Stand der Technik gut bekannt sind, wird an dieser Stelle auf deren weiteren Aufbau beziehungsweise deren Funktionsweise nicht weiter eingegangen.

Die Aufgabe der Erfindung wird nach einem zweiten Aspekt ferner von einem Verfahren zum Herstellen, insbesondere zum Gießwalzen oder Glättwalzen, einer Folienbahn gelöst, bei welchem eine Folienmaterialschmelze einer diesbezüglichen Folienmaterialschmelze verarbeitenden Walzeneinrichtung mit wenigstens einer Folienerzeugungswalze und/oder einem Folienerzeugungsspalt zugeführt, und diese Folienmaterialschmelze mittels der wenigstens einen Folienerzeugungswalze und/oder des Folienerzeugungsspalts zu der Folienbahn geformt wird, und bei welchem die Folienbahn anschließend unterschiedlichen Temperiereinrichtungen sowie wenigstens einer Reckeinrichtung zugeführt wird, wobei sich das Verfahren dadurch auszeichnet, dass die für einen an der Reckeinrichtung durchführbaren Reckprozess erforderliche Recktemperatur mittels der eine Folienmaterialschmelze verarbeitenden Walzeneinrichtung zur Gänze oder zumindest zu 50 %, vorzugsweise zumindest zu 80 % oder mehr, erzeugt wird.

Stammt die an der Reckeinrichtung erforderliche Recktemperatur ausschließlich oder wenigstens zu Teilen aus der Wärme der Folienmaterialschmelze verarbeitenden Walzeneinrichtung kann eine zusätzliche Erwärmung der Folienbahn vor der Reckeinrichtung entfallen oder zumindest stark reduziert werden, wodurch die vorliegende Folienanlage effizienter betrieben werden kann.

Speziell Flachfolien werden heutzutage hauptsächlich im Gießverfahren oder Glättwerksverfahren hergestellt.

Derart hergestellte Folien haben mechanische Eigenschaften, welche im Wesentlichen durch die Verarbeitung der verwendeten Rohstoffe und durch die Rohstoffe beeinflusst werden.

Durch Recken der Folien beziehungsweise Folienbahnen können verbesserte mechanische Eigenschaften oder bessere optische Eigenschaften erzielt werden.

Dieses Recken erfolgt bisher hauptsächlich inline, indem eine bereits erkaltete Folienbahn wieder erwärmt wird, und dann im ein- oder zweistufigen Reckprozess gereckt wird. Anschließend erfolgen dann das sogenannten Annealing und die Abkühlung.

Nachteilig bei diesem Stand der Technik ist jedoch, dass das Recken erst nach einem wiederholten Aufwärmen einer bereits erkalteten Folienbahn erfolgt. Daher sind derartige bisher bekannte Verfahren energetisch unsinnig beziehungsweise ineffektiv.

Zudem hat die Folienbahn bereits einen deutlich höheren kristallinen Anteil, sobald sie einmal erkaltet ist, wodurch sich Kunststoffmoleküle des Folienmaterials schlechter oder teilweise gar nicht mehr innerhalb der Folienbahn anders orientieren lassen. Insbesondere können mechanische Eigenschaften in Längsrichtung der Folie nochmals deutlich verbessert werden.

Vorteilhafterweise wird bei den hier vorgeschlagenen Verfahren der Folienbahn jedenfalls weder unnötigerweise Wärmeenergie entzogen noch zusätzlich zugeführt, so dass hierdurch die Herstellung von Folien beziehungsweise Folienbahnen wesentlich effektiver vorgenommen werden kann.

Die Aufgabe der Erfindung wird nach einem dritten Aspekt auch von einem Verfahren zum Herstellen, insbesondere zum Gießwalzen oder Glättwalzen, einer Folienbahn gelöst, bei welchem eine Folienmaterialschmelze einer diesbezüglichen Folienmaterialschmelze verarbeitenden Walzeneinrichtung mit wenigstens einer Folienerzeugungswalze und/oder einem Folienerzeugungsspalt zugeführt, und diese Folienmaterialschmelze mittels der wenigstens einen Folienerzeugungswalze und/oder des Folienerzeugungsspalts zu der Folienbahn geformt wird, und bei welchem die Folienbahn anschließend unterschiedlichen Temperiereinrichtungen sowie wenigstens einer Reckeinrichtung zugeführt wird, wobei sich das Verfahren dadurch auszeichnet, dass die Folienbahn ausschließlich unter Zuhilfenahme der Wärme aus der Folienmaterialschmelze gereckt wird.

Vorteilhafterweise wird die Folienbahn mittels der vorgenannten Verfahrensführung aus der ersten Wärme, also im Wesentlichen der Wärme der Folienmaterialschmelze, heraus an der Reckeinrichtung gereckt, so dass diese Verfahrensführung ebenfalls besonders effizient durchgeführt werden kann. Hierbei wird bevorzugt auf weiteren Wärmequellen, wie beispielsweise eine heizbare Folienerzeugungswalze, eine heizbare Reckwalze oder dergleichen, verzichtet. Insbesondere können mechanische Eigenschaften in Längsrichtung der Folie nochmals deutlich verbessert werden

Optional ist es vorteilhaft, wenn die Folienbahn zu der Wärme aus der Folienmaterialschmelze zusätzlich noch mittels Wärme von der Folienmaterialschmelze verarbeitenden Walzeneinrichtung und der Reckeinrichtung gereckt wird. Hierdurch kann die Folienbahn mit einem sehr geringen zusätzlichen Energieaufwand zusätzlich thermisch behandelt werden, und zwar vor und/oder während des Reckens.

Die Aufgabe der Erfindung wird nach einem vierten Aspekt auch noch von einem Verfahren zum Herstellen, insbesondere zum Gießwalzen oder Glättwalzen, einer Folienbahn gelöst, bei welchem eine Folienmaterialschmelze einer diesbezüglichen Folienmaterialschmelze verarbeitenden Walzeneinrichtung mit wenigstens einer Folienerzeugungswalze und/oder einem Folienerzeugungsspalt zugeführt und diese Folienmaterialschmelze mittels der wenigstens einen Folienerzeugungswalze und/oder des Folienerzeugungsspalts zu der Folienbahn geformt wird, und bei welchem die Folienbahn anschließend unterschiedlichen Temperiereinrichtungen sowie wenigstens einer Reckeinrichtung zugeführt wird, wobei sich dieses Verfahren dadurch auszeichnet, dass die Folienbahn nach dem Verlassen der wenigstens einen Folienerzeugungswalze und/oder des Folienerzeugungsspalts mit einer Reckeinrichtung unter Umgehung weiterer Temperiereinrichtungen gereckt wird.

Vorteilhafterweise kann hierbei unmittelbar die Wärme aus der Folienmaterialschmelze für den nachfolgenden Reckprozess verwendet werden, wodurch auf weitere Temperiereinrichtung vor der Reckeinrichtung verzichtet werden kann. Hierdurch kann die Folienanlage zum Durchführen des Verfahrens besonders kompakt bauen. Insbesondere können mechanische Eigenschaften in Längsrichtung der Folie nochmals deutlich verbessert werden

Insofern ist es vorteilhaft, wenn die Folienbahn nach dem Verlassen der wenigstens einen Folienerzeugungswalze und/oder des Folienerzeugungsspalts zuerst gereckt wird, und daran anschließend erst weiteren Temperiereinrichtungen zum thermischen Behandeln der Folienbahn zugeführt wird.

Mit anderen Worten bedeutet dies, dass die Folienbahn unter Umgehung einer kritischen Zwischenabkühlung aufgrund einer kritischen Auskühlstrecke gereckt wird.

Beispielsweise ist es hierzu vorteilhaft, wenn die Reckeinrichtung zwischen der wenigstens einen Folienerzeugungswalze und/oder dem Folienerzeugungsspalt, und einer der Temperiereinrichtungen angeordnet ist, wobei die Reckeinrichtung sogleich eine Folienbahnabnahmewalze umfasst, welche der Folienerzeugungswalze direkt nachgeschaltet ist.

Insofern ist es zweckmäßig, wenn die Reckeinrichtung in Maschinenrichtung zwischen der wenigstens einen Folienerzeugungswalze und/oder dem Folienerzeugungsspalt, und einer Tempereinrichtung und/oder einer Kühleinrichtung der Folienanlage angeordnet ist.

Der Begriff "Tempereinrichtung" beschreibt im Sinne der Erfindung eine Heizeinrichtung, welche dem Entfernen einer Eigenspannung in der Folienbahn dient und etwa unter Zugspannung (Voreilung) erfolgt.

Bevorzugt erfolgt hierbei eine Temperierung bis kurz unter der eigentlichen Schmelztemperatur der Folienbahn beziehungsweise des Folienmaterials.

Von Vorteil ist es zudem, wenn die Voreilung einstellbar an der Tempereinrichtung ist.

Im Sinne der Erfindung beschreibt der Begriff "Kühleinrichtung" eine Einrichtung, mittels welcher die Folienbahn vorzugsweise auf nahezu Umgebungstemperatur abgekühlt werden kann.

Hierdurch gelingt das Einfrieren von Kunststoffmolekülorientierungen in der Folienbahn bzw. in dem Folienmaterial.

Diese Kühleinrichtung kann Kühlwalzen umfassen, mittels deren eine Voreilung einstellbar ist.

Der Begriff "Voreilung" beschreibt hierbei einen Vorgang, bei welchem eine Walze und/oder ein Walzenpaar gegenüber einer anderen Walze beziehungsweise einem andere Walzenpaar mit unterschiedlicher Geschwindigkeit kurzfristig oder dauerhaft betrieben werden kann, wodurch es an der Folienbahn zu einer Reckung bzw. Verstreckung des Folienmaterials kommt.

Die vorliegende Aufgabe wird nach einem fünften Aspekt der Erfindung ebenfalls noch von einem Verfahren zum Herstellen, insbesondere zum Gießwalzen oder Glättwalzen, einer Folienbahn gelöst, bei welchem eine Folienmaterialschmelze einer Folienmaterialschmelze verarbeitenden Walzeneinrichtung mit wenigstens einer Folienerzeugungswalze und/oder einem Folienerzeugungsspalt zugeführt, und diese Folienmaterialschmelze mittels wenigstens einer Folienerzeugungswalze und/oder des Folienerzeugungsspalts zu der Folienbahn geformt wird, und bei welchem die Folienbahn anschließend unterschiedlichen Temperiereinrichtungen sowie wenigstens einer Reckeinrichtung zugeführt wird, wobei sich das Verfahren dadurch auszeichnet, dass die Folienbahn nach dem Verlassen der wenigstens einen Folienerzeugungswalze und/oder des Folienerzeugungsspalts einer Vortemperiereinrichtung zugeführt wird, und anschließend von der Vortemperiereinrichtung unmittelbar an eine Reckeinrichtung übergeben wird, mittels welcher die Folienbahn gereckt wird.

Vorteilhafterweise können mittels der Vortemperiereinrichtung in der Folienbahn gegebenenfalls vorliegende unterschiedliche Temperaturbereiche vergleichmäßigt werden, so dass an der Folienbahn idealerweise keine oder nur zu vernachlässigende derartige unterschiedliche Temperaturbereiche mit verschiedenen Temperaturniveaus vorliegen.

Bei allen vorgeschlagenen Verfahren steht insbesondere auch die energetische Energieeffizienz im Vordergrund, da vermieden wird, dass die Folienbahn in Maschinenrichtung nach der Folienmaterialschmelze verarbeiteten Walzeneinrichtung zu stark abkühlt, wie dies bisher im Stand der Technik der Fall ist.

Vielmehr wird die Folienmaterialbahn im Wesentlichen sogleich mit der der ihr noch immer innewohnenden Wärmeenergie aus der Folienmaterialschmelze gereckt, wodurch zusätzliche Erwärmungsvorgänge bevorzugt vollständig vermeidbar sind.

Insofern ist es vorteilhaft, wenn die Folienbahn nach dem Abnehmen von der Folienerzeugungswalze stets oberhalb einer kritischen Recktemperatur, insbesondere zumindest oberhalb einer Temperatur von 50 °C oder besser noch von 80 °C, gehalten wird.

Somit gelingt es einen qualitativ sehr hochwertigen Reckprozess allein aufgrund der der Folienbahn innewohnende Eigenwärme aus der Folienmaterialschmelze durchzuführen. Insbesondere können mechanische Eigenschaften in Längsrichtung der Folie nochmals deutlich verbessert werden

Zweckmäßigerweise wird die Folienbahn mittels der Vortemperiereinrichtung auf die gewünschte Recktemperatur gebracht, falls dies noch erforderlich sein sollte, wobei die Vortemperierung oftmals zwischen 90 °C und 110 °C liegt.

Es versteht sich, dass die vorliegende Vortemperiereinrichtung unterschiedlichst ausgebildet sein kann. Beispielsweise umfasst die Vortemperiereinrichtung wenigstens eine Vortemperierwalze, vorzugsweise zwei Vortemperierwalzen.

Idealerweise sind beide Vortemperierwalzen einzeln antreibbar, so dass auch die Vortemperiereinrichtung mit einer einstellbaren Voreilung betrieben werden kann.

Hierbei kann das Folienmaterial direkt bis unter seine Rekristallisierungstemperatur heruntergekühlt werden, oder alternativ die Folienbahntemperatur über dieser Rekristallisierungstemperatur gehalten werden.

Kumulativ oder alternativ ist es vorteilhaft, wenn die Folienbahn nach dem Verlassen der wenigstens einen Folienerzeugungswalze mittels wenigstens einer Reckwalze der Reckeinrichtung temperiert wird.

Eine zusätzliche Temperierung kann somit direkt mittels der Reckeinrichtung erfolgen, wobei es auch denkbar ist, dass mittels der wenigstens einen Reckwalze, vorzugsweise mittels mehreren temperierten Reckwalzen, der Reckeinrichtung die Funktion der Vortemperiereinrichtung zumindest teilweise übernommen werden kann.

Jedenfalls ist es vorteilhaft, wenn die Reckeinrichtung in Maschinenrichtung unmittelbar hinter einer Vorheizeinrichtung der Temperiereinrichtungen und unmittelbar vor einer weiteren Temperiereinrichtung angeordnet ist.

Hierbei kann eine spezielle Ausführungsvariante vorsehen, dass die Reckeinrichtung in Maschinenrichtung unmittelbar hinter der Vorheizeinrichtung der Temperiereinrichtung vor weiteren Temperiereinrichtungen angeordnet ist, wobei die weiteren Temperiereinrichtungen eine Tempereinrichtung und eine Kühleinrichtung umfassen, und wobei die Reckeinrichtung in Maschinenrichtung unmittelbar vor der Tempereinrichtung angeordnet ist.

Darüber hinaus ist es besonders vorteilhaft, wenn die die Folienmaterialschmelze verarbeitende Walzeneinrichtung wenigstens eine Gießwalze oder wenigstens zwei miteinander einen Walzenspalt ausgestaltende Glättwerkswalze umfasst.

Darüber hinaus ist es vorteilhaft, wenn die Folienbahn nach dem Verlassen der Gießwalze wenigstens einmal temperiert, nämlich erwärmt, daran unmittelbar anschließend gereckt und danach wenigstens ein weiteres Mal, vorzugsweise mehr als einmal, unterschiedlich temperiert wird.

Die Aufgabe wird nach einem weiteren Aspekt der Erfindung auch noch von einem Verfahren zum Herstellen, insbesondere zum Gießwalzen oder Glättwalzen, einer Folienbahn gelöst, bei welchem eine Folienmaterialschmelze einer diesbezüglichen Folienmaterialschmelze verarbeitenden Walzeneinrichtung mit wenigstens einer Folienerzeugungswalze zugeführt und diese Folienmaterialschmelze mittels der wenigstens einen Folienerzeugungswalze zu der Folienbahn umgeformt wird, und bei welchem die Folienbahn anschließend unterschiedlichen Temperiereinrichtungen sowie wenigstens einer Reckeinrichtung zugeführt wird, wobei die Folienbahn nach dem Verlassen der wenigstens einen Folienerzeugungswalze gereckt wird, bevor die Folienbahn einer Tempereinrichtung der Temperiereinrichtungen und/oder einer Kühleinrichtung der Temperiereinrichtungen zugeführt wird.

Bei diesem Verfahren wird die Folienbahn nach dem Verlassen der wenigstens einen Folienerzeugungswalze gezielt mittels der Reckeinrichtung gereckt, und erst anschließend wird die Folienbahn der Tempereinheit zum Entfernen von Eigenspannungen in der Folienbahn beziehungsweise der Kühleinrichtung zum Abkühlen der Folie zugeführt.

Insofern gelangt die Folienbahn von einer Gießwalze beziehungsweise von Glättwalzen zu der Reckeinrichtung bevor die Folienbahn der Kühleinrichtung zugeführt wird.

Die Kühleinrichtung kann vorliegend wenigstens vier Kühlwalzen umfassen.

Im Sinne der Erfindung erfolgt das Recken der Folienbahn in einem deutlich früheren Stadium als bei bisher bekannten Inline-Reckeinheiten.

Insofern können die vorliegenden Verfahren energetisch sinnvoller betrieben werden.

Hierbei lassen sich Reckwerte realisieren, welche in der Regel zwischen 100 % bis 800 % liegen.

Es kann aber auch ein sogenannter Bügelbetrieb an der Reckeinrichtung eingestellt werden, bei welchem die Folienbahn nur 1 % bis 5 % gezogen wird, um Planlagefehler aus der Folie zu ziehen, wie eingangs bereits angedeutet ist.

Das Recken findet erfindungsgemäß im Wesentlichen unter Ausnutzung der "ersten Wärme" statt.

Dies bedeutet mit anderen Worten, dass unmittelbar nach der eigentlichen Folienbahnerzeugung auf der Gießwalze oder zwischen den Glättwerkswalzen die Folienbahn unmittelbar gereckt wird.

Für eine Temperaturvergleichmäßigung an der Folienbahn können der Folienmaterialschmelze verarbeitenden Walzeneinrichtung beispielsweise zwei zusätzliche Aufheizwalzen (Vortemperierwalzen) nachgeschaltet sein. Darauf folgt unmittelbar die eigentliche Reckeinrichtung, welche ein- oder zweistufig ausgeführt sein kann. Anschließend folgen etwa Annealing-Walzen der Tempereinrichtung und Kühlwalzen der Kühleinrichtung.

Die Aufgabe wird nach einem sechsten Aspekt der Erfindung von einer Verwendung einer Folienmaterialschmelze verarbeitenden Walzeneinrichtung zum Erwärmen einer Folienbahn auf Recktemperatur für einen sich unmittelbar an die Folienmaterialschmelze verarbeitenden Walzeneinrichtung anschließenden Reckprozess an einer Folienbahn herstellenden Folienanlage.

Zwar durchläuft die Folienbahn bei deren Erzeugung durch die eine Folienmaterialschmelze verarbeitenden Walzeneinrichtung auch zwangsläufig einen vermeintlich erforderlichen Recktemperaturbereich. Jedoch kühlt die Folienbahn nach Verlassen der die Folienmaterialschmelze verarbeitenden Walzeneinrichtung meistens bis auf Umgebungstemperatur, jedenfalls deutlich bis unterhalb einer designierten Recktemperatur, ab. Insofern wird die die Folienmaterialschmelze verarbeitenden Walzeneinrichtung bisher nicht zum Erwärmen der Folienbahn für einen anschließenden Reckprozess verwendet.

Jedoch kann hierdurch eine Folienanlage im Sinne der Erfindung energetisch wesentlich effektiver betrieben werden.

Bisher wurde eine derartige Folienmaterialschmelze verarbeitenden Walzeneinrichtung unter dem Aspekt der Kühlung der Folienmaterialschmelze während der Ausformung einer Folienbahn eingesetzt. Vorliegend wurde jedoch vorteilhafterweise erkannt, dass bei entsprechender Ausgestaltung einer Folienanlage sich diese Folienmaterialschmelze verarbeitenden Walzeneinrichtung zusätzlich aber auch unmittelbar als eine thermische Vorstufe für eine Reckeinrichtung der Folienanlage eignet, um eine für die Reckeinrichtung erforderliche Recktemperatur an der Folienbahn bereitzustellen.

Es versteht sich, dass Merkmale der vorstehend bzw. in den Ansprüchen beschriebenen Lösungen gegebenenfalls auch kombiniert werden können, um die vorliegend erzielbaren Vorteile und Effekte entsprechend kumuliert umsetzen zu können.

Zusätzlich sind weitere Merkmale, Effekte und Vorteile vorliegender Erfindung anhand anliegender Zeichnung und nachfolgender Beschreibung erläutert, in welchen beispielhaft eine Folienanlage dargestellt und beschrieben ist.

In der Zeichnung zeigt
- die einzige Figur: schematisch eine Modellansicht einer Folienanlage zum Herstellen einer Folienbahn mit einer unter Umgehung einer kritischen Auskühlstrecke in Maschinenrichtung hinter einer eine Folienmaterialschmelze verarbeitenden Walzeneinrichtung angeordneten Reckeinrichtung.

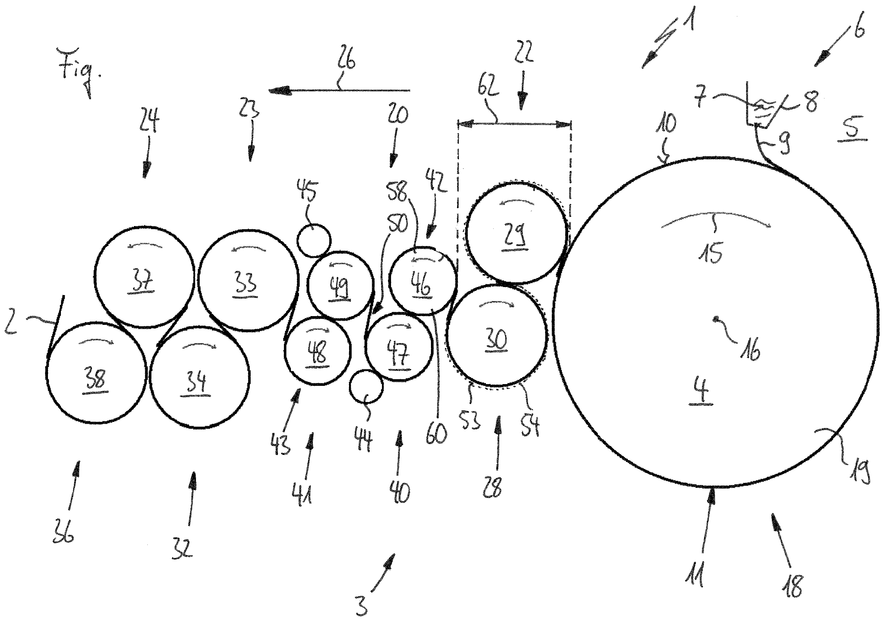

Die in der Figur 1 gezeigte Folienanlage 1 dient dem Herstellen von Folien 2, welche hier beispielhaft als Flachfolie (nicht gesondert beziffert) ausgebildet ist.

Derartige Folienanlagen 1 können unterschiedlichst konzipiert sein, beispielsweise als Gießfolienanlage 3, wie gemäß der Darstellung nach der einzigen Figur schematisch gezeigt, als Glättwerksanlage (nicht gezeigt) oder dergleichen.

Die gezeigte Gießfolienanlage 3 unterscheidet sich im Sinne der Erfindung etwa von einer nicht gezeigten Glättwerksanlage im Wesentlichen durch eine Gießwalze 4, welche eingangsseitig beziehungsweise am Eingang 5 der Folienanlage 1 platziert ist, im Gegensatz zu einem Walzenspalt (nicht gezeigt) ausgestaltenden Glättwalzen (nicht gezeigt) einer Glättwerksanlage.

Jedenfalls handelt es sich bei der in der einzigen Figur dargestellten Folienanlage 1 um eine Gießfolienanlage 3 mit einer Gießwalze 4, welcher eine Extrudereinrichtung 6 zum Erzeugen einer Folienmaterialschmelze 7 vorgeschaltet ist, wobei die Extrudereinrichtung 6 beispielhaft nur hinsichtlich einer Breitspritzdüse 8 gezeigt ist, mittels welcher die Folienmaterialschmelze 7 in Gestalt einer Folienmaterialschmelzefahne 9 auf die Walzenoberfläche 10 der Gießwalze 4 aufgetragen wird.

Mittels der Gießwalze 4 wird die Folienmaterialschmelzefahne 9 zu einer Folienbahn 11 geformt.

Bei der Gießwalze 4 handelt es sich um eine chromierte Stahlwalze (nicht nochmals beziffert) mit einem Durchmesser von 1000 mm, welche bei einer Temperaturdifferenz von +/- 1 °C auf mindestens 120 °C an der Walzenoberfläche 10 erwärmen lässt. Die Gießwalze 4 rotiert mit einer Rotationsrichtung 15 um ihre Gießwalzenachse 16. Hierbei kann die Folienbahn 11 mit einem Umschlingungswinkel von mindestens 220 ° um die Gießwalze 4 geführt werden.

Mit Hilfe der Gießwalze 4 wird die Folienmaterialschmelze 7 auf unter einer Rekristallisationstemperatur der Folienmaterialschmelze 7 gekühlt beziehungsweise in einem Bereich dieser Rekristallisierungstemperatur der Folienmaterialschmelze 7 gehalten, wobei die Rekristallisierungstemperatur abhängig von dem jeweils zu verarbeitenden Kunststoff-Folienmaterial ist.

Jedenfalls umfasst die Folienanlage 1 mit der vorstehend bereits beschriebenen Gießwalze 4 eine Folienmaterialschmelze 7 verarbeitende Walzeneinrichtung 18 mit wenigstens einer Folienerzeugungswalze 19, nämlich in diesem Ausführungsbeispiel die Gießwalze 4.

Ferner umfasst die Folienanlage 1 noch sowohl eine Reckeinrichtung 20 als auch Temperiereinrichtungen 22, 23 und 24 zum thermischen Behandeln der Folienbahn 11, wobei die Folienbahn 11 von der Folienmaterialschmelze 7 verarbeitenden Walzeneinrichtung 18, hier insbesondere in Gestalt der Gießwalze 4, in Maschinenrichtung 26 durch die Folienanlage 1 hindurch mäandrierend transportiert wird.

In dem in der einzigen Figur gezeigten Ausführungsbeispiel ist die erste Temperiereinrichtung 22 eine Vortemperiereinrichtung 28, welche unmittelbar der Gießwalze 4 und damit der Folienmaterialschmelze 7 verarbeitenden Walzeneinrichtung 18 in Maschinenrichtung 26 nachgeschaltet ist. Die Vortemperiereinrichtung 28 besitzt hierbei zwei miteinander korrespondierende Vortemperierwalzen 29 und 30, welche beide als chromierte Stahlwalzen mit einem Durchmesser von 310 mm ausgebildet sind. Die beiden Vortemperierwalzen 29 und 30 können derart temperiert werden, dass an ihrer jeweiligen Walzenoberfläche (nicht mehr explizit beziffert) Temperaturen von 90 °C bis 110 °C eingestellt werden können. Die beiden Vortemperierwalzen 29 und 30 zeichnen sich darüber hinaus durch einen Umschlingungswinkel von mindestens 160 ° aus. Ferner sind sie einzeln antreibbar, wodurch eine Voreilung an der Vortemperiereinrichtung 28 einstellbar ist.

Die erste Temperiereinrichtung 22 beziehungsweise die Vortemperiereinrichtung 28 dient im Wesentlichen der gleichmäßigen Temperierung der Folienbahn 11 auf Recktemperatur, wobei die Recktemperatur bevorzugt oberhalb derjeweiligen Rekristallisierungstemperatur der Folienmaterialschmelze 7 liegt.

Die zweite Temperiereinrichtung 23 ist in diesem Ausführungsbeispiel als Tempereinrichtung 32 ausgebildet, welche zwei Temperwalzen 33 und 34 umfasst, wobei die Temperwalzen 33 beziehungsweise 34 jeweils als chromierte Stahlwalze mit einem Durchmesser von 310 mm ausgestaltet sind. Die Temperwalzen 33 und 34 sind hierbei derart zueinander angeordnet, dass sie für die Folienbahn 11 einen jeweils Umschlingungswinkel von 220 ° zur Verfügung stellen. Auch kann eine Voreilung an der Tempereinrichtung 32 eingestellt werden.

Mittels der Tempereinrichtung 32 wird die Folienbahn 11 beziehungsweise das Folienmaterial kurz unter die Schmelztemperatur des Folienmaterials temperiert, um hierdurch Eigenspannungen in der Folie 2 beziehungsweise der Folienbahn 11 unter Einbringen einer Zugspannung in die Folienbahn 11 zu entfernen.

Hierzu können die erste Temperwalze 33 und die zweite Temperwalze 34 derart erwärmt werden, dass sie mit Oberflächentemperaturen von circa 100 °C bis 110 °C betrieben werden können.

Die Temperaturwalzen 33 und 34 werden oftmals auch als Annealing-Walzen bezeichnet.

Ferner umfasst die Folienanlage 1 gemäß dem gezeigten Ausführungsbeispiel hinsichtlich der dritten Temperiereinrichtung 24 eine Kühleinrichtung 36, welche in Maschinenrichtung 26 gesehen der Tempereinrichtung 32 unmittelbar nachgeschaltet ist, wobei mittels der Kühleinrichtung 36 die Folienbahn 11 erst zu diesem Zeitpunkt auf nahezu Umgebungstemperatur abgekühlt wird, wodurch die Orientierung der Folienmaterialmoleküle erst an der Kühleinrichtung letztendlich "eingefroren" wird.

Die Kühleinrichtung 36 umfasst hierzu in diesem Ausführungsbeispiel zwei Kühlwalzen 37 und 38, welche wiederum als chromierte Stahlwalzen mit jeweils einem Durchmesser von 310 mm ausgeführt sind.

Hierbei sind die beiden Kühlwalzen 37 und 38 derart temperierbar, dass an ihrer jeweiligen Walzenoberfläche eine Oberflächentemperatur von maximal 100 °C vorgesehen werden kann.

Die Kühlwalzen 37 beziehungsweise 38 sind derart gegenüber einander angeordnet, dass sie für die Folienbahn 11 jeweils einen Umschlingungswinkel von mindestens 220 ° gewährleisten.

Daneben besitzt die Reckeinrichtung 20 zumindest in diesem Ausführungsbeispiel zwei Reckwalzengruppen 40 und 41. Jede der Reckwalzengruppe 40 beziehungsweise 41 besteht hierbei aus einem ersten Reckwalzen-Kontaktwalzen-Paar 42 beziehungsweise 43 sowie jeweils einer Hilfswalze 44 beziehungsweise 45.

Das erste Reckwalzen-Kontaktwalzen-Paar 42 weist hierbei eine gummierte Reckwalze 46 sowie eine hiermit korrespondierende Kontaktwalze 47 auf.

Dementsprechend weist das zweite Reckwalzen-Kontaktwalzen-Paar 43 ebenfalls eine gummierte Reckwalze 48 sowie eine hiermit korrespondierende Kontaktwalze 49 auf.

Während die erste und zweite Reckwalze 46 beziehungsweise 48 jeweils eine gummierte Stahlwalze mit einem Durchmesser von 210 mm umfassen, bestehen die erste und zweite Kontaktwalze 47 beziehungsweise 49 jeweils aus einer chromierten Stahlwalze mit einem Durchmesser von 210 mm.

Zumindest eine der zwei Reckwalzen 46 beziehungsweise 48 ist hierbei temperierbar, und zwar bevorzugt derart, dass an der jeweiligen Reckwalze 46 beziehungsweise 48 dann eine Oberflächentemperatur von circa 120 °C einstellbar ist.

Ferner sind die einzelnen Reckwalzen-Kontaktwalzen-Paare 42 und 43 einzeln angetrieben, so dass an der Reckeinrichtung 20 ein Reckfaktor beziehungsweise eine Voreilung bevorzugt stufenlos einstellbar ist.

Mittels der Reckeinrichtung 20 kann ein Recken beziehungsweise ein Verstrecken der Folie 2 beziehungsweise der Folienbahn 11 in einem Verhältnis von 1:4 erzielt werden.

Ferner weist die Reckeinrichtung 20 eine Reckspaltlänge 50 auf, welche bevorzugt einstellbar ist.

Es ist von Vorteil, wenn die Reckspaltlänge 50 möglichst klein ausgebildet ist, so dass die Reckeinrichtung 20 möglichst kompakt baut und insbesondere die Gefahr verringert ist, dass die Folienbahn 11 innerhalb der Reckeinrichtung 20 beziehungsweise zwischen den beiden Reckwalzen-Kontaktwalzen-Paaren 42 und 43 der Reckeinrichtung 20 ungünstig auskühlt.

Die beiden Hilfswalzen 44 und 45 haben einen wesentlich geringeren Durchmesser als die Reckwalzen 46 beziehungsweise 48 sowie die Kontaktwalzen 47 beziehungsweise 49, werden jedoch auch jeweils von einer chromierten Stahlwalze ausgebildet.

Vorteilhafterweise ist die Folienanlage 1 bei dem in der einzigen Figur gezeigten Ausführungsbeispiel derart eingerichtet, dass die Reckeinrichtung 20 unter Umgehung einer kritischen Auskühlstrecke 53 in Maschinenrichtung 26 hinter der wenigstens einen Folienerzeugungswalze 19 beziehungsweise der Gießwalze 4 angeordnet ist.

Die kritische Auskühlstrecke 53 ist gemäß der Darstellung nach der einzigen Figur lediglich symbolhaft dargestellt und eingezeichnet, um deren Position innerhalb der vorliegenden Folienanlage 1 schematisch zu verdeutlichen.

Sie entspricht in diesem Ausführungsbeispiel einer Übergabestrecke 54, entlang welcher die Folienbahn 11 zwischen der Geißwalze 4 und einer Eingangswalze 58 der Reckeinrichtung 20 geführt ist.

In einem sehr einfachen Fall (hier nicht gezeigt) kann die Eingangswalze 58 sogleich eine Folienbahnabnahmewalze 60 verkörpern, mittels welcher die Folienbahn 11 von der Geißwalze 4 abgenommen werden kann.

Mit anderen Worten bedeutet dies, dass die Reckeinrichtung 20 derart gegenüber der Folienmaterialschmelze 7 verarbeitenden Walzeneinrichtung 18 beziehungsweise deren Folienerzeugungswalze 19 beziehungsweise insbesondere der vorliegenden Gießwalze 4 angeordnet ist, dass die Gefahr einer unbeabsichtigten kritischen Abkühlung der Folienbahn 11 auf der Übergabestrecke 54 idealerweise ausgeschlossen werden kann, nachdem die Folienbahn 11 die Folienmaterialschmelze 7 verarbeitenden Walzeneinrichtung 18 verlassen und die Reckeinrichtung 20 beziehungsweise die Eingangswalze 58 der Reckeinrichtung 20 erreicht.

Der Begriff "kritische Auskühlstrecke" beschreibt im Sinne vorliegender Erfindung eine im Wesentlichen in Maschinenrichtung 26 verlaufende Strecke (Übergabestrecke 54), welche die Folienbahn 11 von der Folienerzeugungswalze 19 bis zu der Eingangswalze 58 der Reckeinrichtung 20 zurücklegt, wobei diese Strecke geradlinig verlaufen kann, oder aber, wie in diesem Ausführungsbeispiel gemäß der einzigen Figur gezeigt, mehrfach kurvig ausgebildet ist.

Der Begriff "kritische Auskühlstrecke" beschreibt im Sinne der Erfindung ferner eine Strecke, entlang welcher sich die Folienbahn 11 bisher im Stand der Technik bis unterhalb einer Recktemperatur des jeweiligen Folienbahnmaterials beziehungsweise der jeweiligen Folienbahn 11 abkühlen kann, wobei die jeweilige Recktemperatur auch von dem jeweils verwendeten Folienmaterial abhängig ist.

Die kritische Auskühlstrecke 53 beziehungsweise die Übergabestrecke 54 beginnt mit dem Ablösen der Folienbahn 11 von der Folienerzeugungswalze 19 beziehungsweise der Gießwalze 4 der Folienmaterialschmelze 7 verarbeitenden Walzeneinrichtung 18.

Die kritische Auskühlstrecke 53 beziehungsweise die Übergabestrecke 54 endet demnach mit dem Kontakt der Folienbahn 11 mit der Reckeinrichtung 20 beziehungsweise insbesondere mit der Eingangswalze 58 der Reckeinrichtung 20.

Gemäß einer sehr einfachen Ausgestaltung der vorliegenden Erfindung beziehungsweise der Folienanlage 1 kann eine kritische Auskühlstrecke 53 im Sinne vorliegender Erfindung vermieden werden, wenn die Eingangswalze der Reckeinrichtung sogleich eine Folienbahnabnahmewalze 60 darstellt, mittels welcher die Folienbahn 11 von der Folienerzeugungswalze 19 unmittelbar abnehmbar ist. Dies ist in dem gemäß der einzigen Figur gezeigten Ausführungsbeispiel an der Folienanlage 1 jedoch nicht der Fall, da zwischen der Reckeinrichtung 20 und der die Folienmaterialschmelze 7 verarbeitenden Walzeneinrichtung 18 noch die Vortemperiereinrichtung 28 platziert ist. Würde auf eine derartige Vortemperiereinrichtung 28 bei einer alternativ ausgebildeten Folienanlage 1 verzichtet werden, würde die zuvor bereits beschriebene Eingangswalze 58 der Reckeinrichtung 20 die Folienbahnabnahmewalze 60 verkörpern übernehmen.

Um jedoch die Gefahr einer Ausgestaltung einer im Sinne der Erfindung kritischen Auskühlstrecke 53 an der Folienanlage 1 zu vermeiden, ist die Reckeinrichtung 20 gegenüber der Folienmaterialschmelze 7 verarbeitenden Walzeneinrichtung 18 derart angeordnet, dass der Abstand 62 insbesondere zwischen der Folienerzeugungswalze 19 beziehungsweise Gießwalze 4 und der Eingangswalze 58 (Folienbahnabnahmewalze 60) der Reckeinrichtung 20 weniger als 1000 mm oder weniger als 800 mm, vorzugsweise weniger als 500 mm oder 100 mm, beträgt.

Damit die Vortemperiereinrichtung 28 noch zwischen der Gießwalze 4 und der Eingangswalze 58 Platz findet, beträgt der Abstand 62 bei dem Ausführungsbeispiel gemäß der einzigen Figur zwar weniger als 1000 mm aber mehr als 800 mm.

Gemäß dem in der einzigen Figur gezeigten Ausführungsbeispiel wird das kritische Auskühlen der Folienbahn 11 bei der Übergabe von der die Materialschmelze 7 verarbeitenden Walzeneinrichtung 18 an die Reckeinrichtung 20 durch die dazwischen angeordnete Vortemperiereinrichtung 28 unterbunden.

Mit anderen Worten bedeutet dies, dass eine kritische Auskühlstrecke 53 im Sinne der Erfindung weder zwischen der Vortemperiereinrichtung 28 und der die Folienmaterialschmelze 7 verarbeitenden Walzeneinrichtung 18 noch zwischen der Vortemperiereinrichtung 28 und der Reckeinrichtung 20 besteht.

Insofern ist die Folienanlage 1 gemäß dem Ausführungsbeispiel der einzigen Figur dazu eingerichtet, dass die Reckeinrichtung 20 derart in Maschinenrichtung 26 hinter der Folienerzeugungswalze 19 beziehungsweise Gießwalze 4 angeordnet ist, dass die Folienerzeugungswalze 19 beziehungsweise Gießwalze 4 verlassende Folienbahn 11 an die Vortemperiereinrichtung 28 und anschließend an die Reckeinrichtung 20 übergeben wird.

Der Vorteil, dass die Reckeinrichtung 20 unter Umgehung einer kritischen Auskühlstrecke 53 im Maschinenrichtung 26 hinter der wenigstens einen Folienerzeugungswalze 19 angeordnet ist, ist darin zu sehen, dass die Folienbahn 11 ausschließlich unter Zuhilfenahme der Wärme aus der Folienmaterialschmelze 7 gereckt wird.

Insofern wird hier die für einen an der Reckeinrichtung 20 durchführbaren Reckprozess erforderliche Recktemperatur mittels der eine Folienmaterialschmelze 7 verarbeitenden Walzeneinrichtung 18 zur Gänze oder zumindest zu 80 % erzeugt.

Mit anderen Worten bedeutet dies, dass im Sinne der Erfindung ein Recken ausschließlich unter Zuhilfenahme der dem Folienmaterial beziehungsweise der Folienbahn 11 innewohnende Wärme gereckt wird.

Hierdurch ist vorteilhafterweise ein Abkühlen des Folienmaterials der Folienbahn 11 unterhalb einer noch sinnvollen Recktemperatur vermieden.

Es versteht sich, dass hierbei die Wärme von der Folienmaterialschmelze verarbeitenden Walzeneinrichtung 18 sowie der Reckeinrichtung 20, welche gegebenenfalls noch zusätzlich thermisch auf das Folienmaterial beziehungsweise die Folienbahn 11 einwirken kann, vernachlässigbar ist.

Je nachdem aus welchem Folienmaterial die herzustellende Folie 2 beziehungsweise die Folienbahn 11 hergestellt werden soll beziehungsweise um welche Art von Folie 2 beziehungsweise Folienbahn 11 es sich handelt, ist es vorteilhaft, wenn die Folienbahn 11 nach dem Verlassen der wenigstens einen Folienerzeugungswalze 19 einer Vortemperiereinrichtung 28 zugeführt wird, und anschließend von der Vortemperiereinrichtung 28 unmittelbar an die Reckeinrichtung 20 übergeben wird, wie dies gemäß der einzigen Figur gezeigt ist.

Mittels der Vortemperiereinrichtung 28 gelingt es jedoch sehr gut, die Temperatur beziehungsweise die Wärme innerhalb der Folienbahn 11 möglichst gut zu vergleichmäßigen, wodurch die Reck- beziehungsweise Verstreckqualität des unmittelbar anschließenden Reckprozesses noch weiter gesteigert werden kann.

An dieser Stelle sei explizit darauf hingewiesen, dass Merkmale der vorstehend bzw. in den Ansprüchen und/oder der einzigen Figur beschriebenen Lösungen gegebenenfalls auch kombiniert werden können, um die erläuterten Merkmale, Effekte und Vorteile entsprechend kumuliert umsetzen bzw. erzielen zu können.

Es versteht sich, dass es sich bei dem vorstehend erläuterten Ausführungsbeispiel lediglich um eine erste Ausgestaltung einer erfindungsgemäßen Folienanlage handelt. Insofern beschränkt sich die Ausgestaltung der Erfindung nicht auf dieses Ausführungsbeispiel.

Liste der verwendeten Bezugszeichen
- 1: Folienanlage
- 2: Folien
- 3: Gießfolienanlage
- 4: Gießwalze
- 5: Eingang
- 6: Extrudereinrichtung
- 7: Folienmaterialschmelze bzw. Kunststoffschmelze
- 8: Breitspritzdüse
- 9: Folienmaterialschmelzefahne
- 10: Walzenoberfläche
- 11: Folienbahn
- 15: Rotationsrichtung
- 16: Gießwalzenachse
- 18: Walzeneinrichtung
- 19: Folienerzeugungswalze
- 20: Reckeinrichtung
- 22: erste Temperiereinrichtung
- 23: zweite Temperiereinrichtung
- 24: dritte Temperiereinrichtung
- 26: Maschinenrichtung
- 28: Vortemperiereinrichtung
- 29: erste Vortemperierwalzen
- 30: zweite Vortemperierwalze
- 32: Tempereinrichtung
- 33: erste Temperwalze
- 34: zweite Temperwalze
- 36: Kühleinrichtung
- 37: erste Kühlwalze
- 38: zweite Kühlwalze
- 40: erste Reckwalzengruppe
- 41: zweite Reckwalzengruppe
- 42: erstes Reckwalzen-Kontaktwalzen-Paar
- 43: zweites Reckwalzen-Kontaktwalzen-Paar
- 44: erste Hilfswalze
- 45: zweite Hilfswalze
- 46: erste Reckwalze
- 47: erste Kontaktwalzen
- 48: zweite Reckwalze
- 49: zweite Kontaktwalzen
- 50: Reckspaltlänge
- 53: Auskühlstrecke
- 54: Übergabestrecke
- 58: Eingangswalze
- 60: Folienbahnabnahmewalze
- 62: Abstand

## Patentansprüche

1. Folienanlage (1) zum Herstellen einer Folienbahn, insbesondere Gießfolien- oder Glättwerksanlage (3), mit einer Maschinenrichtung (26), entlang welcher die Folienbahn (11) durch die Folienanlage (1) transportiert wird, mit einer eine Folienmaterialschmelze (7) verarbeitenden Walzeneinrichtung (18) umfassend wenigstens eine Folienerzeugungswalze (19), mit Temperiereinrichtungen (22, 24) zum thermischen Behandeln der Folienbahn (11) und mit einer Reckeinrichtung (20) zum Recken der Folienbahn (11), wobei die Reckeinrichtung (20) unter Umgehung einer kritischen Auskühlstrecke (53) in Maschinenrichtung (26) hinter der wenigstens einen Folienerzeugungswalze (19) angeordnet ist, wobei ein Abstand (62) und/oder eine Übergabestrecke (54) zwischen der wenigstens einen Folienerzeugungswalze (19) und einer Eingangswalze (58) der Reckeinrichtung (20) weniger als 1000 mm oder weniger als 800 mm, vorzugsweise 500 mm oder weniger und mehr als 200 mm oder mehr als 250 mm, vorzugsweise mehr als 450 mm beträgt, wobei die Reckeinrichtung (20) in Maschinenrichtung (26) hinter der Folienerzeugungswalze (19) derart angeordnet ist, dass die die Folienerzeugungswalze (19) verlassene Folienbahn (11) zuerst an eine Vortemperiereinrichtung (22, 28) und anschließend an die Reckeinrichtung (20) übergebbar ist und die Reckeinrichtung (20) wenigstens eine temperierbare Reckwalze umfasst, wobei
***dadurch gekennzeichnet, dass***
die Vortemperiereinrichtung (22, 28) wenigstens eine Folienvortemperierwalze umfasst, mittels welcher die Folienbahn (11) mit einer Temperatur oberhalb 70 °C, vorzugsweise zwischen 90 °C und 120 °C, vortemperierbar ist.

2. Verfahren zum Betreiben einer Folienanlage (1) nach Anspruch 1,
***dadurch gekennzeichnet, dass***
die für einen an der Reckeinrichtung (20) durchführbaren Reckprozess erforderliche Recktemperatur mittels der eine Folienmaterialschmelze (7) verarbeitenden Walzeneinrichtung (18) zumindest zu 50 %, vorzugsweise zumindest zu 80 % oder mehr, erzeugt wird.

## Claims

1. A film plant (1) for producing a film web, in particular a cast film plant or smoothing calender plant (3), having a machine direction (26) along which the film web (11) is conveyed through the film plant (1), having a roller device (18) which processes a film material melt (7), comprising at least one film-producing roller (19), having temperature control devices (22, 24) for thermally treating the film web (11) and having a stretching device (20) for stretching the film web (11), wherein the stretching device (20) is arranged downstream of the at least one film-producing roller (19) in the machine direction (26), circumventing a critical cooling section (53), wherein a distance (62) and/or a transfer section (54) between the at least one film-producing roller (19) and an input roller (58) of the stretching device (20) is less than 1000 mm or less than 800 mm, preferably 500 mm or less and more than 200 mm or more than 250 mm, preferably more than 450 mm, wherein the stretching device (20) is arranged downstream of the film-producing roller (19) in the machine direction (26) in such a way that the film web (11) leaving the film-producing roller (19) can initially be transferred to a pre-temperature control device (22, 28) and subsequently to the stretching device (20) and the stretching device (20) comprises at least one stretching roller which can be tempered, wherein
**characterised in that**
the pre-temperature control device (22, 28) comprises at least one film pre-temperature control roller, by means of which the film web (11) can be pre-tempered at a temperature above 70°C, preferably between 90°C and 120°C.

2. A method for operating a film plant (1) according to Claim 1,
**characterised in that**
the stretching temperature required for a stretching process which can be carried out at the stretching device (20) is produced at least by 50%, preferably at least by 80% or more, by means of the roller device (18) which processes a film material melt (7).

## Revendications

1. Installation à film (1) pour la fabrication d'une bande de film, en particulier installation à film coulé ou lissoir (3), présentant un sens machine (26) le long duquel la bande de film (11) est transportée à travers l'installation à film (1), présentant un dispositif de laminage (18) mettant en œuvre une masse fondue (7) de matériau de film, comprenant au moins un cylindre (19) de génération de film, présentant des dispositifs (22, 24) de thermorégulation pour le traitement thermique de la bande de film (11) et présentant un dispositif d'étirage (20) pour l'étirage de la bande de film (11), le dispositif d'étirage (20) étant agencé, tout en contournant une zone de refroidissement (53) critique, dans le sens machine (26), en aval dudit au moins un cylindre (19) de génération de film, une distance (62) et/ou une zone de transfert (54) entre ledit au moins un cylindre (19) de génération de film et un cylindre d'entrée (58) du dispositif d'étirage (20) étant inférieure à 1000 mm ou inférieure à 800 mm, de préférence de 500 mm ou moins et supérieure à 200 mm ou supérieure à 250 mm, de préférence supérieure à 450 mm, le dispositif d'étirage (20) étant agencé, dans le sens machine (26), en aval du cylindre (19) de génération de film de manière telle que la bande de film (11) quittant le cylindre (19) de génération de film peut d'abord être transférée à un dispositif de thermorégulation préalable (22, 28) et ensuite au dispositif d'étirage (20) et le dispositif d'étirage (20) comprenant au moins un cylindre d'étirage pouvant être thermorégulé,
**caractérisée en ce que**
le dispositif de thermorégulation préalable (22, 28) comprend au moins un cylindre de thermorégulation préalable de film au moyen duquel la bande de film (11) peut être thermorégulée au préalable à une température supérieure à 70 °C, de préférence entre 90 °C et 120 °C.

2. Procédé de fonctionnement d'une installation à film (1) selon la revendication 1,
**caractérisé en ce que**
la température d'étirage nécessaire pour un procédé d'étirage réalisable au niveau du dispositif d'étirage (20) est générée, au moins à raison de 50 %, de préférence à raison d'au moins 80 % ou plus, au moyen du dispositif de laminage (18) mettant en œuvre une masse fondue (7) de matériau de film.
